Europäisches Patentamt

European Patent Office

Office européen des brevets

(19)

(11) **EP 0 649 230 B1**

(12) **FASCICULE DE BREVET EUROPEEN**

(45) Date de publication et mention
de la délivrance du brevet:
**04.04.2001 Bulletin 2001/14**

(51) Int Cl.⁷: **H04H 1/00**

(21) Numéro de dépôt: **94402310.0**

(22) Date de dépôt: **14.10.1994**

(54) **Modulateur numérique à débit variable et son utilisation en radiodiffusion FM**

Digitaler Modulator mit variabler Datenübertragungsgeschwindigkeit und seine Anwendung bei UKW-Rundfunk

Digital modulator with a variable bit rate and its application in FM broadcasting

(84) Etats contractants désignés:
**DE ES GB IT NL SE**

(30) Priorité: **19.10.1993 FR 9312436**

(43) Date de publication de la demande:
**19.04.1995 Bulletin 1995/16**

(73) Titulaire: **TELEDIFFUSION DE FRANCE**
**75732 Paris Cédex 15 (FR)**

(72) Inventeurs:
• **Scomazzon, Pascal**
**F-57078 Montigny Les Metz (FR)**

• **Pignon, Pascal**
**F-45700 Metz (FR)**

(74) Mandataire: **Fréchède, Michel et al**
**Cabinet Plasseraud**
**84, rue d'Amsterdam**
**F-75440 Paris Cédex 09 (FR)**

(56) Documents cités:
**FR-A- 2 559 006**     **FR-A- 2 681 746**
**GB-A- 1 210 742**

• **PATENT ABSTRACTS OF JAPAN vol. 8, no. 206 (E-267) 20 Septembre 1984 & JP-A-59 092 603 (FUJITSU K. K.) 28 Mai 1984**

**Description**

L'invention concerne un modulateur numérique à débit variable, et son utilisation en radiodiffusion à modulation de fréquence, désignée par radiodiffusion FM.

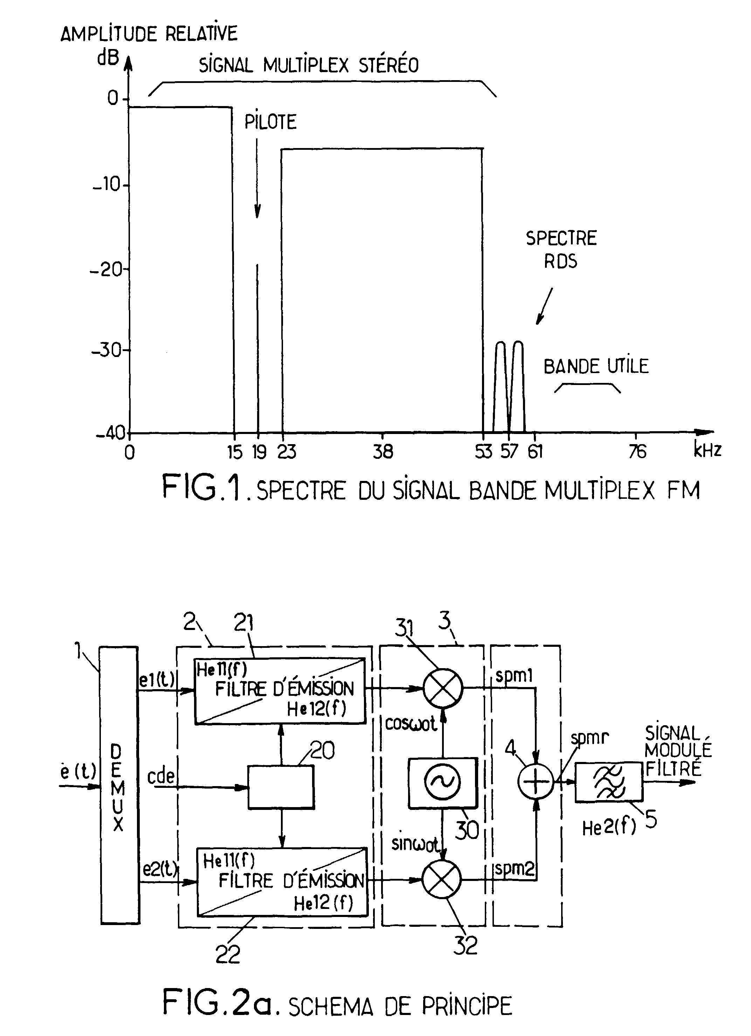

Dans les pays européens, en France notamment, le système de radiodiffusion FM permet, outre la diffusion de programmes radiodiffusés en modulation de fréquence, la transmission d'informations ou données de service destinées aux utilisateurs d'autoradios, de messageries ou de téléaffichage. Le système utilisé dans ces pays est le système RDS (Radio Data System). Ce système consiste, ainsi que représenté en figure 1 dans le cas d'une émission stéréophonique, à introduire dans le spectre du signal bande de base multiplex FM une sous-porteuse centrée sur la fréquence centrale de 57 kHz, dont la bande de fréquence occupée est ± 2,375 kHz autour de la fréquence centrale précitée. L'onde sous-porteuse précitée en canal RDS permet d'assurer la transmission des données de service, avec un débit faible de l'ordre de 1 200b/s.

Toutefois, la faible valeur du débit de transmission du canal RDS ne permet pas la diffusion de nouveaux services tels que diffusion d'images fixes ou de journaux d'informations.

Un codeur-générateur de signaux RDS pour station d'émission radiophonique de ce type a été décrit dans la demande de brevet français FR 2 681 746, au nom de la demanderesse, publiée le 26/03/1993.

Afin de permettre l'introduction et la promotion de nouveaux services, une approche peut consister à engendrer, outre le canal RDS, un canal supplémentaire, consistant par exemple en une sous-porteuse supplémentaire permettant la transmission de données ou informations supplémentaires. Dans le cas d'émission de données supplémentaires, le signal bande de base est constitué par l'ensemble des signaux audio et des signaux supplémentaires.

La recommandation 450-1 du CCIR (Comité Consultatif International des Radiocommunications), relative aux normes de fréquence en ondes métriques, précise que la fréquence centrale de toute sous-porteuse de données supplémentaires doit être comprise entre 15 et 23 kHz ou 53 et 76 kHz, sans toutefois préciser la largeur maximale du signal bande de base multiplex.

Dans cette optique, différents systèmes ont été proposés pour la transmission de données supplémentaires, avec un débit de transmission autorisant la promotion de nouveaux services.

Parmi ceux-ci on peut citer :

- le système RECEPTOR développé aux Etats-Unis d'Amérique par la société AT&E. Ce système permet un débit de transmission de données supplémentaires de 19 kb/s par codage duobinaire, puis modulation en amplitude à double bande latérale d'une sous-porteuse de fréquence centrale 66,5 kHz. L'occupation spectrale est de ± 9,5 kHz autour de la fréquence centrale précitée et le spectre du signal du système RECEPTOR est compris dans la bande de fréquences 57-76 kHz. Ce système présente donc l'inconvénient du recouvrement des spectres des signaux des canaux RDS et RECEPTOR, rendant le système RECEPTOR incompatible avec le système RDS, sauf introduction d'un filtrage de la partie basse du spectre RECEPTOR, au prix d'une diminution de performances.
- Le système proposé par la société N.H.K. (Japan Broadcasting Corporation) permet des applications ou prestations de services très diverses telles que télétexte, son numérique, en raison du débit de transmission très important, 48 kb/s. Le système N.H.K. met en oeuvre un processus de modulation de type QPSK, (Quadrature Phase Shift Keying) dans lequel le signal de données est modulé autour d'une sous-porteuse de fréquence centrale 76 kHz. Le spectre du canal N.H.K. situé entre les fréquences 60,4 et 91,6 kHz est compatible avec le système R.D. S. Toutefois la fréquence maximale du signal bande de base multiplex, 91,6 kHz, est largement supérieur à la fréquence maximale en émission 76 kHz, telle que définie par le rapport 1 065 du CCIR, Spectre RF des émetteurs de radiodiffusion sonore à modulation de fréquence, question 46/10, Programme d'étude 46 L/10.

En outre, le système N.H.K. est susceptible de contribuer à l'émission d'un signal modulé en fréquence risquant de provoquer des interférences avec les canaux adjacents, notamment en Europe et en France, pays dans lesquels l'espacement entre deux canaux est de 100 kHz. Une utilisation directe des deux systèmes précités n'est donc guère envisageable.

La présente invention a pour objet de remédier aux inconvénients précités par la mise en oeuvre d'un modulateur numérique à débit variable, autorisant la promotion de services nouveaux en radiodiffusion FM, par introduction d'un canal de transmission de données supplémentaires totalement compatible tant avec la recommandation 450-1 qu'avec le rapport 1 065 précités du CCIR.

Un autre objet de la présente invention est la mise en oeuvre d'un modulateur numérique à débit variable permettant une commutation entre deux valeurs de débit de données supplémentaires transmises, en fonction des applications ou services réalisés, en cours de transmission de ces données supplémentaires.

Un autre objet de la présente invention est en outre la mise en oeuvre d'un modulateur numérique à débit de transmission commutable, sans changement de la largeur de bande du signal modulé autour d'une onde porteuse de même fréquence centrale.

Un autre objet de la présente invention est enfin la mise en oeuvre d'un modulateur numérique à débit variable autorisant la promotion de services nouveaux en radiodiffusion FM, totalement compatible avec le système R.D.S. de transmission de données auxiliaires.

Le modulateur numérique à débit variable d'un signal numérique d'émission, objet de la présente invention, est remarquable en ce qu'il comprend un circuit de démultiplexage temporel de ce signal numérique d'émission en un premier et en un deuxième signal d'émission élémentaire, et un premier et un deuxième circuit de filtrage d'émission en bande de base correspondant à un premier type de modulation à un premier débit et à un deuxième type de modulation à un deuxième débit respectivement. Le premier et le deuxième circuit de filtrage d'émission en bande de base reçoivent le premier respectivement le deuxième signal d'émission élémentaire et délivrent un premier respectivement un deuxième signal élémentaire filtré. Un circuit de commande de commutation de débit, par commutation du premier au deuxième mode de filtrage, ou réciproquement, à partir d'un signal de commande de débit est prévu. Un circuit modulateur en phase et en quadrature de phase d'une onde porteuse de fréquence déterminée fo reçoit sur ses entrées de modulation le premier respectivement le deuxième signal élémentaire filtré et délivre un premier respectivement un deuxième signal de porteuse modulée et un circuit additionneur recevant le premier et le deuxième signal de porteuse modulée permet de délivrer un signal de porteuse modulée résultant. Un circuit de filtrage centré sur la fréquence fo de l'onde porteuse permet d'éliminer la périodicité du spectre du signal de porteuse modulée résultant, pour délivrer un signal modulé résultant filtré pour diffusion.

Le modulateur numérique à débit variable objet de la présente invention trouve application à la mise en oeuvre d'émetteurs de radiodiffusion FM, pour la transmission de données supplémentaires aux données auxiliaires de type R.D.S., en vue de la promotion de services nouveaux mis à la disposition des usagers ou auditeurs.

Il sera mieux compris à la lecture de la description et à l'observation des dessins ci-après dans lesquels, outre la figure 1 relative à l'art antérieur,

- la figure 2a représente un schéma de principe sous forme de blocs fonctionnels du modulateur numérique à débit variable, objet de la présente invention,
- la figure 2b représente un schéma de principe illustratif du processus de filtrage pour mise en forme du signal d'émission,
- la figure 2c représente la réponse impulsionnelle de filtres de mise en forme du signal d'émission permettant une modulation à un premier respectivement à un deuxième débit de transmission,
- la figure 3a représente un mode de réalisation avantageux du modulateur numérique à débit variable objet de l'invention tel que représenté en figure 2a,
- la figure 3b représente un détail de réalisation de la figure 3a, relatif au démultiplexage des échantillons constitutifs du signal d'émission,
- la figure 3c représente un mode de réalisation particulier des filtres de mise en forme ou filtres d'émission en bande de base correspondant au premier type de modulation à un premier débit respectivement au deuxième type de modulation à un deuxième débit,
- la figure 4 représente un mode de réalisation préférentiel non limitatif du modulateur numérique à débit variable objet de l'invention représenté en figure 3a, 3b et 3c,
- la figure 5a représente le schéma général d'un modulateur asservi sur la fréquence du signal pilote du signal multiplex stéréo,
- la figure 5b représente le schéma d'une boucle à verrouillage de phase.

Une description plus détaillée d'un modulateur numérique à débit variable d'un signal d'émission conforme à l'objet de la présente invention, sera maintenant donnée en liaison avec la figure 2a et les figures suivantes.

D'une manière générale, on indique que le signal d'émission, noté e(t), est formé par une séquence de bits de valeur quelconque représentative de l'information ou des données supplémentaires à transmettre en radiodiffusion FM.

Ainsi qu'on l'observera sur la figure 2a précitée, le modulateur objet de la présente invention comprend un circuit 1 de démultiplexage temporel du signal numérique d'émission e(t) en un premier e1(t) et en un deuxième e2(t) signal d'émission élémentaire, également constitué chacun par une suite de bits. On comprend ainsi que pour un signal numérique d'émission e(t) à une fréquence bits formée par un signal carré de fréquence Fb, correspond en fait, en raison du démultiplexage, une fréquence symbole Fs égale à la moitié de la fréquence bits, les symboles ou groupes de symboles étant bien entendu représentatifs au moins partiellement de l'information supplémentaire à transmettre.

Ainsi qu'on l'observera sur la figure 2a, le modulateur numérique objet de la présente invention comporte également un module 2 de filtrage d'émission en bande de base du premier et du deuxième signal d'émission élémentaire e1(t), e2(t). Le module 2 de filtrage d'émission en bande de base comporte en fait un premier et un deuxième circuit de filtrage d'émission en bande de base noté 21 respectivement 22, ces circuits permettant d'effectuer un premier type de modulation à un premier débit respectivement un deuxième type de modulation à un deuxième débit, du premier et du deuxième signal d'émission élémentaire e1(t), e2(t). Le premier 21 et le deuxième 22 circuit de filtrage d'émission en bande de base recevant le premier respectivement le deuxième signal d'émission élémentaire délivrent un premier respectivement un deuxième signal élémentaire filtré, noté e1f(t), e2f(t).

Ainsi qu'on l'a en outre représenté en figure 2a, le module de filtrage d'émission en bande de base 2 comprend une entrée de commande de débit recevant un signal correspondant, noté cde, ce signal permettant d'assurer une commutation du premier débit au deuxième débit ou réciproquement, par commutation du premier type de modulation au deuxième type de modulation ou réciproquement, ainsi qu'il sera décrit ci-après dans la description.

En outre, le modulateur objet de la présente invention comprend un circuit modulateur en phase et en quadrature de phase d'une onde sous-porteuse supplémentaire, plus commodément désignée par onde porteuse, de fréquence fO, recevant sur ses entrées de modulation le premier respectivement le deuxième signal élémentaire filtré e1f(t), e2f(t) et délivrant un premier respectivement un deuxième signal de porteuse modulée, ces signaux étant notés spm1, spm2 sur la figure 2a. Le modulateur 3 comprend, de manière classique, un premier et un deuxième circuit modulateur 31, 32 alimenté par l'onde porteuse en phase respectivement en quadrature de phase par un oscillateur 30 à la fréquence f0.

Ainsi qu'on l'a en outre représenté sur la figure précitée, un circuit additionneur 4 est prévu lequel reçoit le premier et le deuxième signal de porteuse modulée spm1, spm2 et délivre un signal de porteuse modulée résultant noté spmr.

Enfin, un circuit de filtrage centré sur la fréquence de l'onde porteuse f0, ce circuit étant noté 5 sur la figure 2a, permet d'éliminer la périodicité du spectre du signal de porteuse modulée résultant spmr pour délivrer un signal modulé résultant filtré destiné à la diffusion.

On indique qu'au cours du fonctionnement, le modulateur numérique à débit variable objet de la présente invention peut ainsi être commandé en débit par le signal de commande de débit, noté cde, lequel, par l'intermédiaire du circuit de commutation de débit 20, permet d'assurer le choix du premier mode de filtrage respectivement du deuxième mode de filtrage du premier et du deuxième circuit de filtrage d'émission en bande de base 21 et 22, c'est-à-dire finalement, par le choix de la fonction de transfert correspondante notée $He1_1(f)$ et $He1_2(f)$ des premier et deuxième circuit de filtrage 21 et 22, d'effectuer le choix du débit associé au mode de filtrage correspondant, ainsi qu'il sera décrit ultérieurement dans la description.

Une description plus détaillée du principe de filtrage d'émission en bande de base des circuits de filtrage 21 et 22 dans le premier respectivement dans le deuxième mode de filtrage, avec leur débit de transmission correspondant, sera maintenant donnée en liaison avec la figure 2b.

Ainsi que représenté sur la figure précitée, on indique que le premier et le deuxième circuit de filtrage d'émission en bande de base 21, 22 peuvent comprendre successivement en cascade un module de synthèse numérique d'une forme d'onde recevant le premier, respectivement le deuxième signal d'émission élémentaire e1(t), e2(t). On rappelle que la source numérique ou signal d'émission e(t) est démultiplexée pour former le premier et le deuxième signal d'émission élémentaire précité. On indique que le module de synthèse numérique permet d'engendrer une suite d'échantillons correspondant au premier respectivement au deuxième type de modulation, selon le choix de modulation et donc de débit retenu.

Un convertisseur numérique analogique noté CNA sur la figure 2b reçoit la suite d'échantillons précités et délivre le premier respectivement le deuxième signal élémentaire filtré e1f(t), e2f(t).

Ainsi, suite au démultiplexage, le signal d'émission d'origine e(t) est transformé en deux signaux en vérifiant la relation 1 :

$$e_1(t) = \sum_k a_k \delta(t-kTb) \Rightarrow \begin{cases} e_1(t) = \sum_k a_{2k}\delta(t-2kTb) \\ \\ e_2(t) = \sum_k a_{2k+1}\delta[t-(2k+1)Tb] \end{cases} \qquad (1)$$

Dans la relation précédente Tb désigne la durée ou la période bits, $a_k = +/- 1$ désigne les éléments binaires du signal d'émission d'origine, $\delta(t)$ désigne l'impulsion de Dirac à l'instant t=O.

D'une manière générale on indique que le filtrage d'émission selon la fonction de transfert $He1_1(f)$ ou $He1_2$ (f) est réalisé en bande de base sous forme numérique, le filtrage analogique passe-bande réalisé par le filtrage 5 en sortie du modulateur objet de la présente invention, ayant uniquement pour fonction d'éliminer la périodicité du spectre du signal modulé filtré résultant mais n'ayant aucun rôle relativement à la mise en forme de ce signal.

Ainsi qu'on l'a représenté sur la figure 2b, le filtrage en bande de base du train numérique constitué par la suite de symboles [an] émis avec un rythme 1/Ts, avec Ts égal 2Tb, Tb désignant la durée ou période de la séquence de bits constitutive du signal d'émission e(t), conduit au signal filtré :

$$c(t) = \sum_k a_n \cdot i(t-nT_s) \qquad\qquad (2)$$

Dans la relation précédente i(t) est l'impulsion élémentaire de mise en forme et le filtrage numérique à l'émission consiste à calculer la suite des échantillons [ck] correspondant à un signal temporel c(t) vérifiant la relation :

$$c_k = c(kT_e) \qquad\qquad (3)$$

La suite des échantillons c(t) est alors ensuite convertie par le convertisseur numérique analogique CNA à une fréquence 1/Te, où Te représente une fréquence de conversion en signal analogique. On indique que Te désigne la période d'échantillonnage et vérifie la relation Te = Ts/N où N désigne le nombre d'échantillons par symbole an.

Pour une impulsion élémentaire i(t) de durée comprise entre [0,LTs] c'est-à-dire sur un intervalle s'étendant sur L symboles, le signal filtré suite d'échantillons ck précédemment mentionné s'écrit sur la durée du symbole (L-1)/2 :

$$c_k = \sum_{n=0}^{+L-1} a_n \cdot i_{k-nN} \qquad\qquad (4)$$

pour k = 0 → N - 1.

Selon un aspect particulièrement avantageux du modulateur numérique variable objet de la présente invention, le premier et le deuxième type de modulation utilisés sont bien entendu des types de modulation compatibles avec le système RDS. D'une manière générale, on indique que le premier type de modulation peut consister en un type de modulation à phase continue d'indice de modulation 1/2 pouvant être décomposé en quasi-linéaire et que le deuxième type de modulation utilisé peut consister en une modulation OQPSK, quel que soit le type de filtrage utilisé. Ainsi, le type de modulation GMSK utilisé dans le système numérique de radiocommunication de deuxième génération GSM ainsi que le type de modulation utilisé dans le système de diffusion de données Darc peuvent être utilisés.

En outre, les systèmes de radiocommunication du futur, dits de troisième génération, sont susceptibles d'utiliser plusieurs types de modulation telles que citées précédemment. Celles-ci apparaissent bien adaptées aux différents milieux de transmission, tels que milieu intérieur à un immeuble, urbain, suburbain et rural, et sont susceptibles de permettre la mise en oeuvre de dispositifs de codage comportant un modulateur numérique conforme à l'objet de la présente invention. De tels systèmes numériques de radiocommunication ont été décrits dans l'article "*ATDMA System Concept*" issu de la conférence *Race Mobile Telecommunications Workshop* qui s'est déroulée à Metz, France, du 16 au 18 juin 1993, et publié par H.J. EUL, SIEMENS AG, Hofmann Straße 51, D-8000, München 70, Germany ; M. STREETON, ROKE MANOR RESEARCH LTD., Romsey, Hampshire, S051 0ZN, United Kingdom ; C.MOUROT et A.URIE, ALCATEL RADIOTELEPHONIE, 32, av.Kléber, 92707 Colombes, France. Ces types de modulation font actuellement l'objet d'un projet commun d'étude, dénommé projet SWIFT, ce projet ayant pour objet la mise en oeuvre d'un service multi-applicatif de radiocommunication basé sur une diffusion à haut débit sur le réseau FM.

Dans un mode de réalisation non limitatif permettant d'obtenir des débits élevés, le premier type de modulation peut par exemple consister en une modulation OQPRS, le filtre en bande de base de fonction de transfert $He1_1(f)$ étant un filtre équivalent au codage duobinaire.

De même, le deuxième type de modulation utilisé correspondant à la fonction de transfert $He1_2(f)$ est une modulation OQPSK, le filtre en bande de base étant un filtre en cosinus surélevé, dont le facteur de débordement désigné par ROLL-OFF FACTOR en langage anglo-saxon est pris égal à 0,5.

D'une manière générale on indique que le type de modulation OQPSK et le type de modulation OQPRS reposent sur le même principe, le type de modulation OQPRS présentant par rapport au type de modulation OQPSK les différence ci-après :

- le train de bits démultiplexé subit un précodage,
- la réponse du filtre de mise en forme est différente.

Pour une description plus détaillée des types de modulation OQPSK et OQPRS, on pourra utilement se reporter à l'article publié par Monsieur Pascal SCOMAZZON et intitulé "Etude comparative de modulations numériques sur sous-porteuse MF" dans la revue de l'UER-Technique n° 248 Août 1991, Editeur : Union européen de radiodiffusion Case Postale 67, CH 1218 GRAND SACONNEX GENEVE SUISSE.

D'une manière générale on indique en outre que le filtrage global ainsi obtenu satisfait au critère de NYQUIST avec partage optimal entre l'émission et la réception, ce qui assure l'absence d'interférence entre symboles et l'obtention de performances théoriques idéales en matière de taux d'erreur en présence de bruit gaussien.

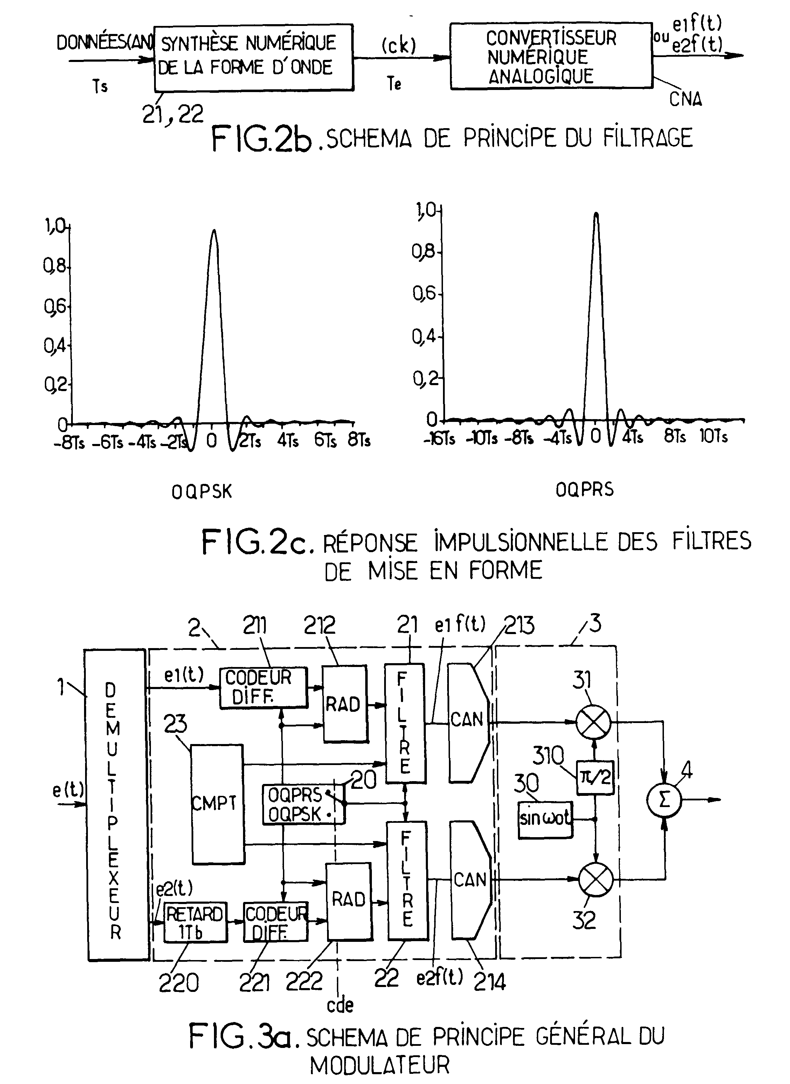

La figure 2c donne une représentation de la réponse impulsionnelle des filtres de mise en forme c'est-à-dire la réponse impulsionnelle associée aux fonctions de transfert $He1_1(f)$ respectivement $He1_2(f)$ dans le cas des types de modulation OQPSK respectivement OQPRS. Les diagrammes correspondants sont tracés en valeur d'amplitude relative sur l'axe des ordonnées et en fonction du temps, le temps étant repéré par rapport à la période symbole Ts.

En référence à la relation (4) précédemment mentionnée dans la description, on indique que pour une raison de faisabilité il convient de tronquer la réponse impulsionnelle du filtre bande de base équivalent pour un nombre L fini de symboles.

Des essais en laboratoire ont permis de montrer que les filtres équivalents en bande de base peuvent être limités à LTs avec L = 11. On indique en outre que le nombre N d'échantillons par symbole an peut alors être choisi égal à 16 ou 32.

Un mode de réalisation correspondant permet alors, pour une fréquence d'horloge fixe de valeur déterminée, d'obtenir un premier type de modulation de type OQPSK réalisé à un débit de 19,2 kb/s et un deuxième type de modulation de type OQPRS avec un débit de 30 kb/s pour une largeur de bande de 15 kHz centrée sur une fréquence de l'onde porteuse voisine de 68,5 kHz.

En ce qui concerne la réalisation effective des circuits de filtrage de mise en forme 21 et 22 représentés en figure 2a, on indique que plusieurs possibilités peuvent être envisagées.

La première possibilité consiste à utiliser un processeur numérique de signal permettant d'effectuer le filtrage des données par calcul en temps réel, par une convolution discrète entre le signal reçu et la réponse impulsionnelle des filtres de mise en forme tel que représenté en figure 2c. Cette méthode de filtrage présente l'inconvénient d'effectuer un nombre très important de multiplications/accumulations nécessitant un temps de cycle inférieur à 40 ns et donc entraînant un surcoût important.

Une autre solution peut consister à réaliser un filtrage par transcodage de données, lequel présente l'avantage d'être bon marché et facile à mettre en oeuvre, les opérations de transcodage présentant en outre l'avantage de nécessiter au plus un accès en lecture à une mémoire de transcodage, laquelle permet de délivrer directement le signal élémentaire filtré e1f(t), e2f(t), ainsi qu'il sera décrit ultérieurement dans la description.

Un mode de réalisation avantageux non limitatif d'un modulateur numérique conforme à la deuxième solution précédemment mentionnée, sera maintenant décrit en liaison avec la figure 3a.

Sur la figure 3a on reconnaît les éléments essentiels déjà représentés en figure 2a, auxquels ont été ajoutés d'autres éléments permettant la réalisation précitée.

D'une manière générale, outre les circuits de filtrage d'émission en bande de base 21 et 22 déjà représentés en figure 2a, le modulateur numérique à débit variable, objet de la présente invention, comporte associé au circuit de filtrage 21 et 22 précité un registre à décalage, noté 212 respectivement 222, chaque registre à décalage étant précédé d'un codeur différentiel noté 211 respectivement 221. Le codeur différentiel 211 reçoit le premier signal d'émission élémentaire e1(t) et le codeur différentiel 221 reçoit le deuxième signal d'émission élémentaire e2(t) par l'intermédiaire d'un circuit de retard 220, lequel permet d'introduire un retard d'une période bit Tb sur le signal précité.

En outre, un compteur 23 est prévu afin de permettre la discrimination sur les L symboles consécutifs ainsi que précédemment mentionné dans la description. La configuration des L symboles dans chaque registre à décalage 212, 222 engendre par transcodage un signal ou suite de N échantillons, ce signal étant défini sur une période symbole Ts. A chaque période Ts, à un décalage Ts/2 près, la configuration des L symboles dans chaque registre à décalage 212, 222 change, par décalage d'un élément binaire de gauche à droite, et à chaque période symbole Ts un nouveau signal, suite de N échantillons de durée Ts est engendré, ce signal constituant le signal élémentaire filtré e1f(t), e2f(t). Le compteur 23 permet d'engendrer un signal d'horloge à la fréquence d'échantillonnage Te, donnant accès aux N valeurs d'échantillons, N = 32 ou N = 16, définissant le signal élémentaire filtré e1f(t), e2f(t) sur la durée Ts.

Le circuit de commutation de débit 20 permet alors, à partir du signal de commande de débit cde d'agir sur les codeurs différentiels 211 et 221 de façon, en définitive, à inhiber le codage différentiel, c'est-à-dire le précodage, lorsque le type de modulation choisi correspond au premier type de modulation OQPSK, et au contraire à valider le précodage, c'est-à-dire le fonctionnement des codeurs différentiels 211 et 221 lorsque le type de modulation choisi est le deuxième type de modulation OQPRS.

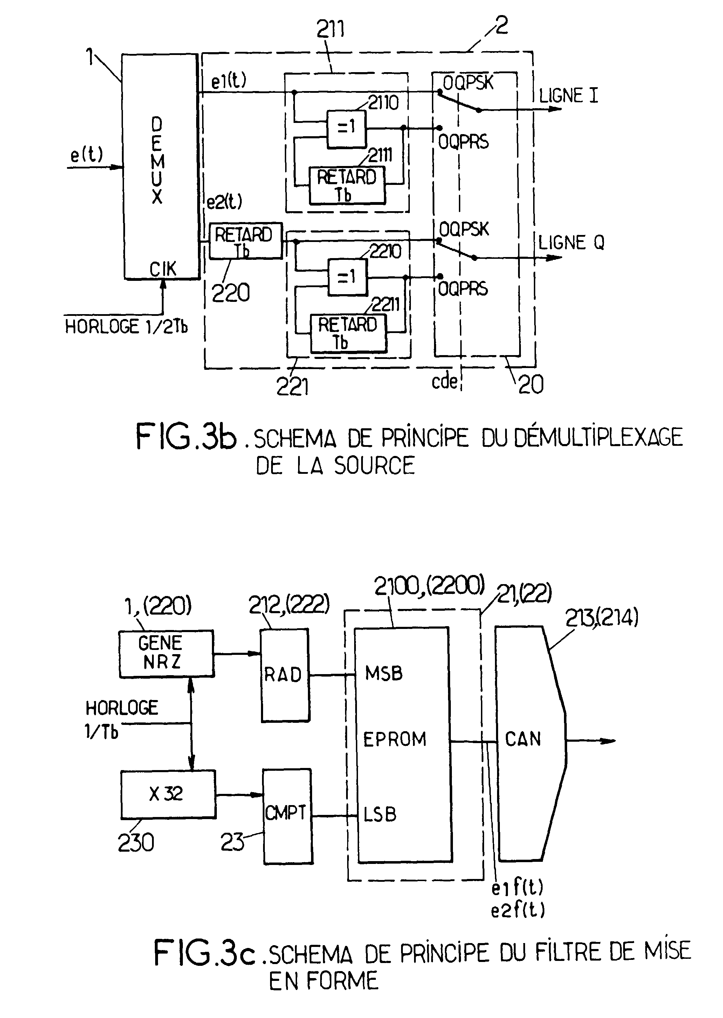

Le démultiplexage des données constituant le signal d'émission e(t) et leur précodage sera décrit en liaison avec la figure 3b, laquelle reprend une partie des éléments correspondants de la figure 3a. En relation avec la figure 3b précitée, on indique que chaque codeur différentiel 211 ou 221 peut être formé par un circuit logique OU exclusif portant la référence 2110, 2210, dont une entrée est bouclée sur la sortie par l'intermédiaire d'un circuit de retard 2111, 2211, le retard introduit par ce circuit étant égal à une durée ou période bits Tb. On comprend alors que le circuit 20 de commutation de débit peut consister par exemple en un interrupteur logique lequel permet de délivrer simplement le premier signal d'émission élémentaire e1(t) et le deuxième signal d'émission élémentaire e2(t) retardé d'une période ou durée bits Tb par le circuit de retard 220, dans le cas où le premier type de modulation OQPSK a été choisi, et au contraire les signaux précédemment mentionnés précodés par l'intermédiaire du premier codeur différentiel 211 respectivement du deuxième codeur différentiel 221, lorsque le deuxième type de modulation OQPRS a été choisi. Ces signaux sont délivrés sur une ligne I et une ligne Q au registre à décalage 212 respectivement 222.

Une description plus détaillée d'un mode de réalisation avantageux des circuits de filtrage d'émission en bande de base 21 ou 22 du circuit modulateur numérique à débit variable représenté en figure 3a sera maintenant donnée en liaison avec la figure 3c.

Connaissant les réponses en fréquence des circuits de filtrage et en particulier des fonctions de transfert $He1_1(f)$ et $He1_2(f)$ de ces filtres, à partir des équations précédemment données dans la description, on obtient les réponses impulsionnelles telles que représentées en figure 2c pour le type de modulation correspondant OQPSK respectivement OQPRS par une transformée de Fourier inverse. Les réponses impulsionnelles précitées décroissent et deviennent négligeables pour une largeur de signal équivalente à onze périodes bits Tb.

Conformément au mode de réalisation avantageux des circuits de filtrage d'émission en bande de base, objet de l'invention, celui-ci consiste à effectuer un filtrage par transcodage de valeurs, ces valeurs étant bien entendu mémorisées dans un circuit mémoire de type PROM et le filtrage PROM étant similaire à une opération de convolution.

Pour les L = 11 symboles significatifs précédemment mentionnés, chaque symbole étant représenté par 1 bit issu du démultiplexage, c'est-à-dire pour 2 048 combinaisons différentes de ces bits pour onze bits consécutifs, les résultats du produit de convolution de chacune de ces combinaisons avec la réponse impulsionnelle du filtre de mise en forme, selon le type de modulation OPQSK ou OQPRS, peuvent alors être mémorisés dans la mémoire précitée. Sur la figure 3c on a représenté le circuit de filtrage 21 constitué d'une mémoire 2100 de type EPROM recevant à partir du démultiplexeur 1 le premier signal d'émission élémentaire e1(t) par l'intermédiaire du registre à décalage 212. Dans le cas du circuit de filtrage d'émission en bande de base portant la référence 22, celui-ci reçoit le deuxième signal d'émission élémentaire e2(t) par l'intermédiaire du circuit de retard 220 d'une période bits Tb. Dans ce cas là le registre à décalage porte la référence 222 et le circuit de filtrage 22 est constitué par exemple par une mémoire de type EPROM 2200. Pour cette raison, et afin de ne pas introduire une figure supplémentaire relative au circuit de filtrage 22, le démultiplexeur 1 délivrant le premier signal d'émission élémentaire e1(t) et le deuxième signal d'émission élémentaire e2(t) par l'intermédiaire du circuit de retard 220 est représenté par la référence 1,220 sur la figure 3c.

Sur la figure 3c les références chiffrées relatives au deuxième circuit de filtrage 22 et aux circuits qui lui sont associés, sont portées entre parenthèses.

On indique que les résultats du calcul du produit de convolution mémorisés dans les mémoires EPROM 2100 ou 2200 peuvent être effectués en prenant par exemple 352 échantillons par combinaison de onze bits, soit 32 échantillons par période bits Tb. Ces 32 valeurs correspondent au filtrage du bit central de la combinaison de L = onze bits traités en tenant compte de l'influence de 5 bits de part et d'autre du bit central. La capacité de la mémoire EPROM correspond à celle du produit du nombre de combinaisons par 32, nombre de valeurs.

Ainsi, la séquence des bits d'entrée et en particulier la séquence de bits constitutifs du premier et du deuxième signal d'émission élémentaire est découpée en mots de onze bits par les registres à décalage 212 ou 222, permettant l'adressage correspondant en mémoire EPROM des valeurs filtrées associées. Le compteur 23 formé par un compteur à 5 étages permet d'adresser trente-deux valeurs pour chaque combinaison, et le premier ou deuxième signal élémentaire filtré e1f(t), e2f(t) est disponible sur un BUS de sortie de la mémoire EPROM 2100 ou 2200. En outre, on indique que le signal d'horloge à la fréquence bit 1/Tb est multiplié par 32 par un multiplicateur de fréquence 230 pour adresser le compteur 23. Ainsi, le registre à décalage 212 ou 222 permet d'adresser les poids forts de la mémoire EPROM 2100 ou 2200 alors que le compteur 23 adresse les bits de poids faible de la mémoire afin d'obtenir les 32 échantillons nécessaires.

En ce qui concerne la génération des signaux d'horloge permettant le cadencement de l'ensemble des éléments du modulateur numérique variable représenté en figure 3a, on indique que ces signaux doivent être compatibles avec des débits utilisés de 30 kb/s et 19,2 kb/s associés à chacun des types de modulation.

Compte tenu du mode de réalisation décrit en figure 3c, dans lequel une fréquence 32 fois supérieure à la fréquence bit doit être obtenue, il est possible d'utiliser un générateur à quartz multiple de 960 kHz et de 614,4 kHz, dont la fréquence d'horloge de base est par exemple égale à 15,36 MHz. Une division de fréquence permet alors d'obtenir les différents signaux d'horloge nécessaires au cadencement de l'ensemble.

On indique enfin, en liaison avec la figure 3c, que le premier et le deuxième signal élémentaire filtré sont ensuite délivrés par le bus de sortie de la mémoire EPROM 2100, 2200 au convertisseur analogique numérique correspondant 213 ou 214 afin d'assurer l'attaque du circuit modulateur 3 par les signaux analogiques correspondant.

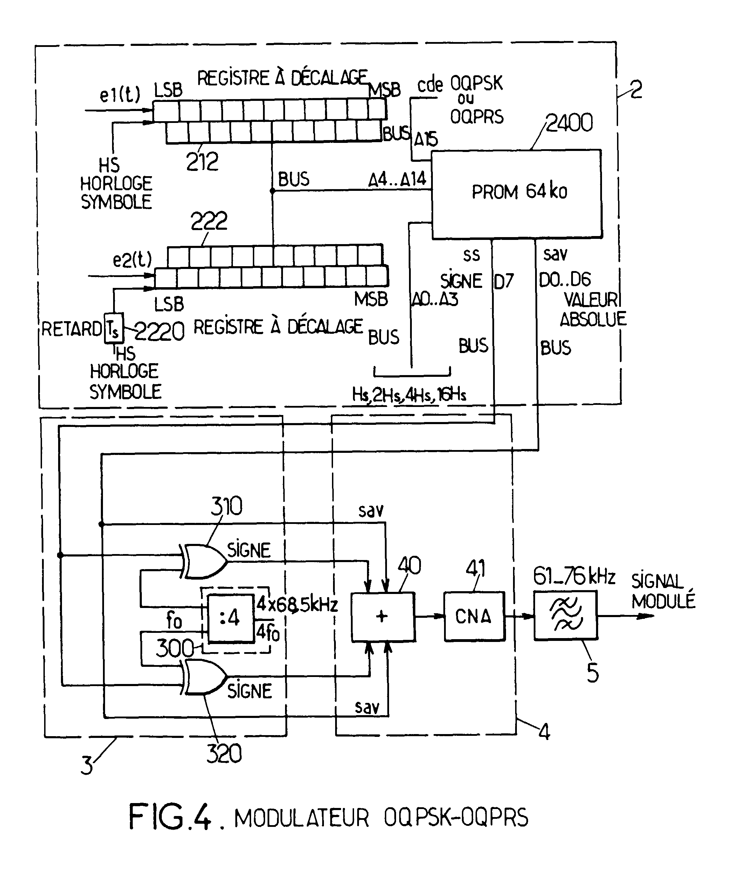

Un mode de réalisation préférentiel du modulateur numérique à débit variable objet de la présente invention, sera maintenant décrit en liaison avec la figure 4.

Sur la figure précitée, le démultiplexeur 1 n'est pas représenté afin de ne pas surcharger le dessin. D'une manière générale on indique que ce mode de réalisation permet de supprimer toute opération de précodage nécessaire au type de modulation OQPRS, l'opération de filtrage étant bien entendu effectuée par transcodage pur du premier et du deuxième signal d'émission élémentaire e1(t), e2(t), soit par lecture des valeurs mémorisées dans une mémoire PROM unique 2400, ces valeurs étant représentatives du premier et du deuxième signal d'émission élémentaire filtré e1f(t), e2f(t) précités.

Les circuits de filtrage d'émission en bande de base sont ainsi formés par le premier registre à décalage 212, le deuxième registre à décalage 222, lesquels sont interconnectés par une liaison par BUS à la mémoire 2400 précédemment mentionnée. Le registre à décalage 212 reçoit le premier signal élémentaire e1(t) ainsi qu'un signal de cadencement Hs à fréquence horloge symbole. Ce signal d'horloge permet d'effectuer un échantillonnage des symboles correspondants.

Le registre à décalage 222 reçoit le deuxième signal d'émission élémentaire e2(t) ainsi que le signal d'horloge symbole précité, retardé d'une durée égale à la période d'échantillonnage symbole Ts. On rappelle que dans ce cas Ts = 2.Tb. Chaque registre à décalage 212, 222, délivre alternativement toutes les deux périodes du signal d'horloge d'échantillonnage de symbole HS, un symbole correspondant sur la ligne de type BUS interconnectée à la mémoire PROM 2400. Ainsi, le circuit mémoire PROM précité, de type programmable, reçoit alternativement les symboles formés par les onze bits délivrés par chaque registre à décalage 212 et 222, ainsi que le signal de commande de débit cde constitué par exemple par un signal logique représentatif du type de modulation et donc du débit choisi. Le circuit mémoire PROM 2400 délivre alors, par transcodage, un signal de signe ss et un signal de valeur absolue, noté sav, ces signaux étant bien entendu représentatifs du premier et du deuxième signal élémentaire filtré.

Dans le mode de réalisation de la figure 4, on indique que la mémoire de type PROM 2400 peut présenter une capacité de mémorisation de 64 ko, l'adresse sur 16 bits de la mémoire précitée étant constituée par exemple par :

- le débit choisi et par conséquent le type de modulation retenu OQPSK ou OQPRS,
- le contenu de l'un des registres à décalage 212 ou 222 lequel représente une combinaison formée par onze symboles de données à filtrer,
- les signaux d'horloge symbole Hs et de bits dont la combinaison représente le rang de l'échantillon parmi les 32 échantillons de chaque symbole.

De manière pratique, on indique, à titre d'exemple non limitatif, que la liaison de type BUS permet par exemple de transmettre les bits A0 à A3 relatifs aux signaux d'horloge de symbole HS, 2HS, 4HS et 16HS, les onze bits A4 à A14 représentatifs de la combinaison délivrée par chaque registre à décalage et le bit A15 représentatif du signal de commande de débit cde. Le premier et le deuxième signal élémentaire filtré délivré par la mémoire PROM 2400 est par exemple délivré codé sur 8 bits D0 à D6 relatifs à la valeur absolue et bit D7 relatif au signe de chaque signal.

Ainsi qu'on l'a en outre représenté en figure 4, le circuit modulateur 3 en phase et en quadrature de phase peut être constitué par un modulateur numérique comprenant deux circuits de type OU exclusif notés 310 et 320, recevant sur une première entrée le signal de signe ss et sur une deuxième entrée un signal d'horloge dont la fréquence est égale à celle de l'onde porteuse f0. On indique que le signal d'horloge de fréquence porteuse f0 peut être formé par un circuit diviseur par 4 noté 300, lequel reçoit en entrée un signal d'horloge de fréquence 4.f0. On indique bien sûr que le circuit 300 joue le rôle du circuit 30 alors que les circuits 310 et 320 jouent le rôle des circuits 31 et 32 respectivement dans le modulateur analogique en phase et en quadrature de phase tels que représentés en figure 2a.

En outre, un circuit 40 de concaténation de bits reçoit d'une part le signal délivré par chaque circuit de type OU exclusif 310, 320, et d'autre part le signal de signe ss délivrés par le circuit mémoire de type PROM 2400.

On comprend bien sûr que les signaux numériques issus des circuits OU exclusif 310, 320 sont additionnés numériquement pour délivrer un signal numérique résultant, lequel est converti en un signal analogique par un convertisseur numérique - analogique 41, ce signal constituant le signal de porteuse modulée résultant spmr.

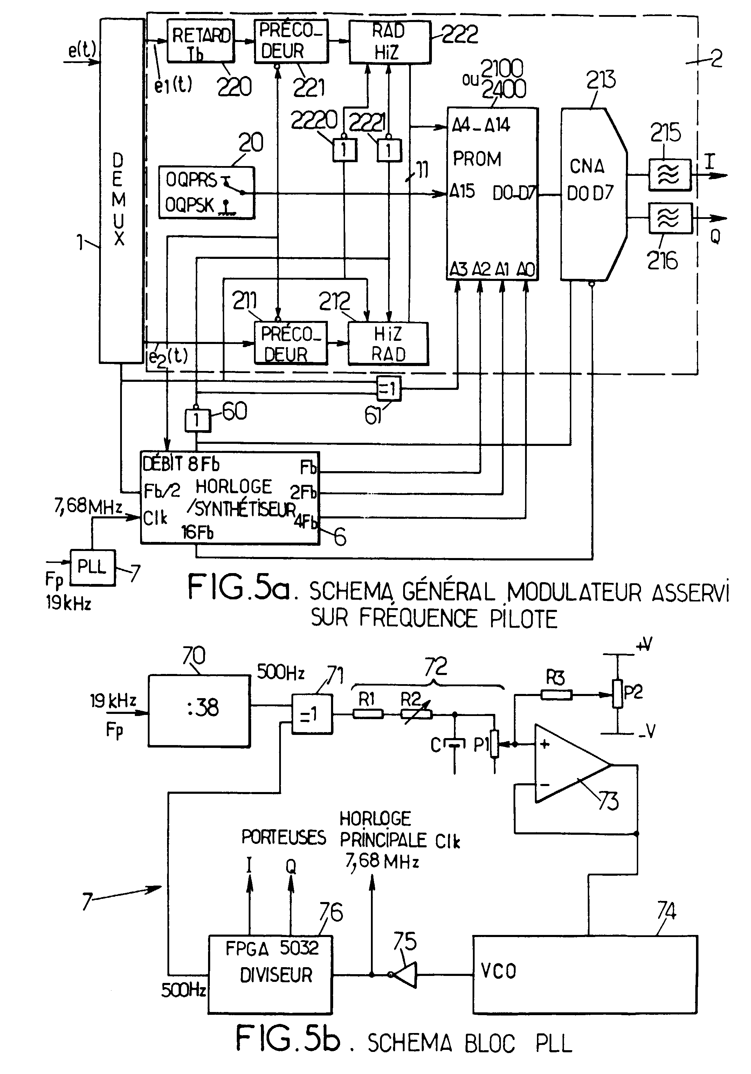

Une description d'un mode de réalisation avantageux du modulateur objet de la présente invention, dans lequel un asservissement des débits du premier et du deuxième type de modulation et de la fréquence du signal de porteuse f0 sur la fréquence pilote Fp = 19 kHz du signal multiplex stéréo représenté en figure 1 sont effectués, sera donnée en liaison avec les figures 5a et 5b.

Dans le mode de réalisation représenté en figure 5a, une simplification a en outre été introduite par rapport au mode de réalisation représenté en figure 3a ou 4, les mêmes éléments portant cependant les mêmes références que dans les figures précitées. Dans ce mode de réalisation, le nombre N d'échantillons traités par *symbole* significatif est divisé par deux et ramené de 32 à 16, la fréquence de base du signal d'horloge clk étant divisée par deux et ramenée de 15,36 MHz à 7,68 MHz, bien que les débits du premier et du deuxième type de modulation OQPSK, OQPRS soient maintenus aux valeurs précédentes 19,2 kb/s respectivement 30 kb/s. La capacité de la mémoire PROM de filtrage 2100 ou 2400 peut donc être divisée par deux, ce qui permet d'utiliser une seule mémoire PROM de même capacité, au lieu de deux, moyennant un adressage multiplexé de la mémoire PROM 2100 (2400) à partir des signaux précodés ou non, délivrés sur une profondeur de 11 bits par les registres à décalage 212 ou 222, en fonction du mode de filtrage sélectionné OQPRS ou OQPSK, ainsi que décrit précédemment dans la description. En raison de l'adressage multiplexé de la mémoire PROM 2100 ou 2400 dans le mode de réalisation de la figure 5a, les données du signal numérique délivré par les registres à décalage précités sont verrouillées (latchées en langage anglosaxon). Dans le mode de réalisation précité, les registres à décalage 212 et 222 sont constitués par des bascules "latches" à trois états câblées en registre à décalage. L'ensemble est commandé par une horloge 6 laquelle reçoit la fréquence de base du signal d'horloge clk = 7,68 MHz par l'intermédiaire d'une boucle de verrouillage de phase 7 recevant le signal à fréquence pilote Fp = 19 kHz. L'horloge 6 délivre des signaux d'horloge secondaire à la fréquence Fb/2, Fb, 2Fb, 4Fb, 8Fb et 16Fb, où Fb désigne la fréquence bits.

On rappelle les relations entre fréquence symboles Fs, fréquence bits Fb et fréquence d'échantillonnage Fe dans le tableau ci-après :

| Symboles | Fb=2Fs=1/Tb | Ts=2Tb | Fe=16Fs=8Fb |
|---|---|---|---|
| Description | Fb : fréquence bit Fs : fréquence symbole | Ts : période symbole Tb : période bit | Fe : fréquence d'échantillonnage |
| OQPSK | 19,2 kbits/s | $\simeq 104{,}17\mu s$ | 153,6 kHz |
| OSPRS | 30 kbits/s | $\simeq 66{,}67\mu s$ | 240 kHz |

avec :

| | |
|---|---|
| Fclk=7,68 MHz | Fclk=fréquence de l'oscillateur local |
| Fclk=50*Fe=400*Fb | en OQPSK |
| Fclk=32*Fe=256*Fb | en OQPRS |
| Fclk=112*F0 = 68,571kHz | en OQPSK et OQPRS |
| f0=fréquence le la sous-porteuse supplémentaire ou onde porteuse. | |

Ainsi, les signaux d'horloge secondaire 16Fb, 8Fb permettent de commander le convertisseur numérique analogique 213, lequel est suivi de filtres analogiques de bande 215, 216, les signaux 4Fb, 2Fb, Fb et 8Fb, Fb/2 par l'intermédiaire d'un inverseur 60 et d'une porte OU exclusif 61 le séquencement de l'adressage en lecture de la PROM 2100 ou 2400, le signal Fb/2 le démultiplexeur 1, le signal 8Fb, directement par deux inverseurs en cascade 60, 2221 et par l'intermédiaire de l'inverseur 60 les registres à décalage 222 et 221 respectivement, le signal Fb/2 le cadencement des registres à décalage 222, 212, par l'intermédiaire d'un inverseur 2220 et directement respectivement.

Enfin on indique que dans le cas de la figure 5a, les signaux délivrés par la mémoire PROM de filtrage 2100 ou 2400, correspondant au premier respectivement au deuxième signal élémentaire filtré e1f(t), e2f(t) sont alors directement convertis en signal analogique par un convertisseur numérique analogique 213, puis filtrés par des filtres passe-bas 215, 216 pour délivrer le premier respectivement le deuxième signal élémentaire filtré sous forme analogique, avant transposition.

Sur la figure 5b on a représenté la boucle à verrouillage de phase 7, PLL, laquelle comprend un diviseur de fréquence par 38 référencé 70 recevant la fréquence pilote Fp et délivrant un signal pilote divisé, une porte OU exclusif 71 effectuant la comparaison de phase entre le signal pilote divisé et un signal oscillateur local divisé, un filtre de boucle 72 de type passe-bas atténué du premier ordre à constante de temps variable et un montage potentiométrique 73 permettant de prélever une fraction du signal de sortie filtré délivré par le filtre 72. Le montage potentiométrique 73 commande un oscillateur contrôlé en tension 74 lequel délivre le signal d'horloge clk à fréquence de base 7,68 MHz par un circuit de mise en forme 75. Un circuit diviseur de fréquence par 15 360 délivre un signal oscillateur local divisé à la porte OU exclusif 71 pour comparaison de phase avec le signal pilote divisé. L'oscillateur local 74 est un oscillateur très stable à alimentation stabilisée par diodes Zener afin d'obtenir une fréquence de repos aussi proche que possible de 7,68 MHz, ce qui permet de définir une plage de capture étroite et de diminuer ainsi la gigue de phase liée au facteur de multiplication important de la fréquence pilote (15 360).

Enfin, on indique que l'horloge 7 peut comprendre un synthétiseur de fréquences, incorporé ou non à celle-ci, afin de commander en fréquence les signaux d'horloge auxiliaires délivrés par celle-ci. Ceci permet le cas échéant d'obtenir un premier et un deuxième débit variable et ajustable, continûment par exemple, dans une plage de valeurs de débit proportionnelle à la variation de fréquence des signaux d'horloge.

On a ainsi décrit un modulateur numérique à débit variable particulièrement performant permettant non seulement d'effectuer une commutation entre deux valeurs discrètes de débit en cours de fonctionnement mais également de moduler les valeurs discrètes précitées au cours de ce fonctionnement, en fonction, notamment, des conditions de diffusion d'informations supplémentaires en radiodiffusion FM.

**Revendications**

1. Modulateur numérique à débit variable d'un signal numérique d'émission e(t), caractérisé en ce qu'il comprend :

   - des moyens (1) de démultiplexage temporel dudit signal numérique d'émission e(t) en un premier et un deuxième signal d'émission élémentaire el(t), e2(t),
   - des premiers (21) et deuxièmes (22) moyens de filtrage d'émission en bande de base, chacun desdits moyens de filtrage pouvant fonctionner selon un premier ou un second mode de filtrage, correspondant à un premier type de modulation à un premier débit respectivement à un deuxième type de modulation à un deuxième débit, lesdits premiers (21) et deuxièmes (22) moyens de filtrage d'émission en bande de base recevant le premier el(t) respectivement le deuxième e2(t) signal d'émission élémentaire et délivrant un premier respectivement un deuxième signal élémentaire filtré, elf(t), e2f(t),
   - des moyens (20) de commande de commutation de débit par commutation du premier au deuxième mode de filtrage, ou réciproquement, recevant un signal de commande de débit,
   - des moyens modulateurs (3) en phase et en quadrature de phase d'une onde porteuse de fréquence f0 recevant sur leurs entrées de modulation le premier respectivement le deuxième signal élémentaire filtré et délivrant un premier respectivement un deuxième signal de porteuse modulée,
   - des moyens additionneurs (4) recevant lesdits premier et deuxième signal de porteuse modulée et délivrant un signal de porteuse modulée résultant,
   - des moyens de filtrage (5) centrés sur la fréquence de l'onde porteuse f0 permettant d'éliminer la périodicité du spectre du signal de porteuse modulé résultant pour délivrer un signal modulé résultant filtré, pour diffusion.

2. Modulateur selon la revendication 1, caractérisé en ce que lesdits premiers (21) et deuxièmes (22) moyens de filtrage d'émission en bande de base comprennent chacun successivement en cascade :

   - un module (21;22) de synthèse numérique d'une forme d'onde recevant ledit premier respectivement deuxième signal d'émission élémentaire el(t), e2(t), constitutifs chacun d'une suite de symboles, ledit module de synthèse formant filtre en bande de base, permettant d'engendrer une suite d'échantillons correspondant au premier respectivement au deuxième type de modulation,
   - un convertisseur numérique analogique (CNA) recevant ladite suite d'échantillons et délivrant le premier respectivement le deuxième signal élémentaire filtré el(t), e2(t).

3. Modulateur selon la revendication 2, caractérisé en ce que le premier type de modulation est une modulation à phase continue d'indice 1/2 de type quasi-linéaire, et en ce que le deuxième type de modulation est une modulation OQPSK.

4. Modulateur selon la revendication 3, caractérisé en ce que le premier type de modulation étant une modulation OQPRS le filtre en bande de base est un filtre équivalent au codage duo-binaire, et en ce que le deuxième type de modulation étant une modulation OQPSK le filtre en bande de base est un filtre en cosinus surélevé.

5. Modulateur selon la revendication 4, caractérisé en ce que, pour une fréquence d'horloge fixe de valeur déterminée, le premier et le deuxième type de modulation sont réalisés à un débit de 30 kb/s respectivement 19,2 kb/s pour une largeur de bande de 15 kHz centrée sur une fréquence de l'onde porteuse f0 voisine de 68,5 kHz.

6. Modulateur selon l'une des revendications 1 à 5, caractérisé en ce que lesdits premier (21) et deuxième (22) moyens de filtrage comportent :

   - un registre à décalage (212;222) recevant ledit premier respectivement deuxième signal d'émission ainsi qu'un signal d'échantillonnage de symboles direct respectivement retardé d'une période T de la période du signal d'échantillonnage de symboles, chaque registre à décalage (212;222) délivrant alternativement toutes les deux périodes du signal d'horloge d'échantillonnage de symboles un symbole correspondant,
   - un circuit mémoire (2400) de type programmable PROM, recevant alternativement lesdits symboles ainsi qu'une variable représentative du type de modulation et de débit choisi, et délivrant par transcodage un signal de signe et un signal de valeur absolue représentatifs du premier et du deuxième signal élémentaire filtré.

7. Modulateur selon les revendications 1 et 6, caractérisé en ce que lesdits moyens modulateurs en phase et en quadrature de phase sont formés par un modulateur numérique comprenant :

 - deux circuits de type OU exclusif (310, 320) recevant chacun sur une première entrée ledit signal de signe et sur une deuxième entrée un signal d'horloge (300) dont la fréquence est égale à celle de l'onde porteuse f0,
 - un circuit (40) de concaténation de bits recevant d'une part le signal délivré par chaque circuit de type OU exclusif et, d'autre part, le signal de signe délivré par ledit circuit mémoire de type PROM, et délivrant sous forme numérique ledit signal d'émission modulé,
 - un circuit convertisseur numérique analogique (41) recevant ledit signal d'émission modulé sous forme numérique et délivrant un signal d'émission analogique correspondant.

8. Modulateur selon l'une des revendications précédentes, caractérisé en ce que lesdits premier (21) et deuxième (22) moyens de filtrage sont asservis sur la fréquence pilote Fp = 19kHz du signal multiplex stéréo, par l'intermédiaire d'une boucle à verrouillage de phase (7) et d'une horloge (6), ce qui permet d'asservir les débits des premier et deuxième type de modulation et la fréquence du signal de porteuse modulée résultant à ladite fréquence pilote.

9. Modulateur selon la revendication 8, caractérisé en ce que ladite horloge (6) comporte un synthétiseur de fréquences, ce qui permet de commander en fréquence les signaux d'horloge délivrés par ladite horloge (6) pour obtenir un premier et un deuxième débit variable et ajustable dans une plage de valeurs de débits proportionnelle à la variation de fréquence des signaux d'horloge.

10. Utilisation d'un modulateur selon l'une des revendications précédentes pour la transmission d'informations supplémentaires en radiodiffusion FM.

## Claims

1. Variable-throughput digital modulator of a transmission digital signal e(t), characterized in that it comprises:

 - means (1) for time-based demultiplexing of the said transmission digital signal e(t) into a first and a second elementary transmission signal el(t), e2(t),
 - first (21) and second (22) baseband transmission filtering means corresponding to a first type of modulation at a first throughput and to a second type of modulation at a second throughput respectively, the said first (21) and second (22) baseband transmission filtering means receiving the first el(t) and the second e2(t) elementary transmission signal respectively, and delivering a first and a second filtered elementary signal, elf(t), e2f(t) respectively,
 - throughput switching control means (20) by switching from the first to the second filtering mode, or conversely, receiving a throughput control signal,
 - in-phase and phase-quadrature modulators (3) of a carrier wave of frequency f0 receiving, on their modulation inputs, the first and the second filter elementary signal respectively and delivering a first and a second modulated carrier signal respectively,
 - adder means (4) receiving the said first and second modulated carrier signal and delivering a resultant modulated carrier signal,
 - filtering means(5) centred on the frequency of the carrier wave f0 making it possible to eliminate the periodicity of the spectrum of the resultant modulated carrier signal in order to deliver a filtered resultant modulated signal, for broadcast.

2. Modulator according to Claim 1, characterized in that the said first (21) and second (22) baseband transmission filtering means each comprise successively in cascade:

 - a module (21;22) for digital synthesis of a wave form, receiving the said first and second elementary transmission signal el(t), e2(t) respectively, each constituting a series of symbols, the said synthesis module forming a baseband filter, making it possible to generate a series of samples corresponding to the first and to the second type of modulation respectively,
 - a digital-analogue converter (CNA) receiving the said series of samples and delivering the first and the second filtered elementary signal el(t), e2(t) respectively.

3. Modulator according to Claim 2, characterized in that the first type of modulation is a continuous-phase modulation with index 1/2 of quasi-linear type, and in that the second type of modulation is OQPSK modulation.

4. Modulator according to Claim 3, characterized in that the first type of modulation being OQPRS modulation, the baseband filter is a filter equivalent to duo-binary coding, and in that the second type of modulation being OQPSK modulation, the baseband filter is a raised cosine filter.

5. Modulator according to Claim 4, characterized in that, for a fixed clock frequency of defined value, the first and the second type of modulation are performed at a throughput of 30 kb/s and 19.2 kb/s respectively for a band width of 15 kHz centred on a frequency of the carrier wave f0 close to 68.5 kHz.

6. Modulator according to one of Claim 1 to 5, characterized in that the said first (21) and second (22) filtering means include:

   - a shift register (212;222) receiving the said first and second transmission signal respectively, as well as a symbol sampling signal, directly and delayed by a period T of the period of the symbol sampling signal respectively, each shift register (212;222) delivering a corresponding symbol, alternately every two periods of the symbol sampling clock signal,
   - a programmable PROM-type memory circuit (2400) receiving the said symbols as well as a variable representative of the type of modulation and throughput chosen, alternately, and delivering, by transcoding, a sign signal and an absolute-value signal which are representative of the first and of the second filtered elementary signal.

7. Modulator according to Claims 1 and 6, characterized in that the said in-phase and phase-quadrature modulators are formed by a digitial modulator comprising:

   - two circuits of exclusive OR-type (310;320), each receiving, on a first input, the said sign signal and, on a second input, a clock signal (300), the frequency of which is equal to that of the carrier wave f0,
   - a bit-concatenation circuit (40), receiving, on the one hand, the signal delivered by each exclusive OR-type circuit and, on the other hand, the sign signal delivered by the said PROM-type memory circuit, and delivering the said modulated transmission signal in digital form,
   - a digital-analogue converter circuit (41), receiving the said transmission signal modulated in digital form and delivering a corresponding analogue transmission signal.

8. Modulator according to one of the preceding claims, characterized in that the said first (21) and second (22) filtering means are slaved to the pilot frequency $F_P$ = 19 kHz of the stereo multiplex signal, via a phase-locked loop (7) and a clock (6) which makes it possible to slave the throughputs of the first and second type of modulation and the frequency of the resultant modulated carrier signal to the said pilot frequency.

9. Modulator according to Claim 8, characterized in that the said clock (6) includes a frequency synthesizer, which makes it possible to control the frequency of the clock signals delivered by the said clock (6) in order to obtain a first and a second throughput which is variable and adjustable within a range of throughput values proportional to the variation in frequency of the clock signals.

10. Use of a modulator according to one of the preceding claims for transmitting supplementary information in FM radio broadcasting.

**Patentansprüche**

1. Digitaler Modulator mit variabler Datenübertragungsgeschwindigkeit eines digitalen Sendesignals e(t), dadurch gekennzeichnet, daß er aufweist:

   - Einrichtungen (1) für ein Zeit- Demultiplexieren des digitalen Sendesignals e(t) in ein erstes und ein zweites elementares Sendesignal e1(t), e2(t),
   - erste (21) und zweite (22) Basisband-Sendefiltereinrichtungen, wobei jede der Filtereinrichtungen gemäß einem ersten oder einem zweiten Filtermodus, entsprechend einem ersten Modulationstyp mit einer ersten Datenübertragungsgeschwindigkeit bzw. einem zweiten Modulationstyp mit einer zweiten Datenübertragungsgeschwindigkeit, betrieben werden kann, wobei die ersten (21) und zweiten (22) Basisband-Sendefiltereinrichtungen das erste el(t) bzw. das zweite e2(t) elementare Sendesignal empfangen und ein erstes bzw. zweites gefiltertes elementares Signal elf(t), e2f(t) ausgeben,

- Einrichtungen (20) zur Steuerung der Umschaltung der Datenübertragungsgeschwindigkeit durch Umschalten von dem ersten auf den zweiten Filtermodus oder umgekehrt, die ein Signal zur Steuerung der Datenübertragungsgeschwindigkeit empfangen,
- Einrichtungen (3) zur phasengleichen und um 90° phasenverschobenen Modulation einer Trägerwelle einer Frequenz f0, die an ihren Modulationseingängen das erste bzw. das zweite gefilterte elementare Signal empfangen und ein erstes bzw. ein zweites moduliertes Trägersignal ausgeben,
- Additionseinrichtungen (4), die das erste und zweite modulierte Trägersignal empfangen und ein resultierendes moduliertes Trägersignal ausgeben,
- auf die Trägerwellenfrequenz f0 zentrierte Filtereinrichtungen (5), die erlauben, die Periodizität des Spektrums des modulierten resultierenden Trägersignals zu eliminieren, um für eine Abstrahlung ein moduliertes resultierendes gefiltertes Signal auszugeben.

2. Modulator nach Anspruch 1, dadurch gekennzeichnet, daß die ersten (21) und zweiten (22) Basisband-Sendefiltereinrichtungen jeweils nacheinander in Serie aufweisen:

- ein Modul (21;22) zum digitalen Zusammensetzen einer Wellenform, das das erste bzw. zweite elementare Sendesignal el(t), e2(t) empfängt, die jeweils aus einer Reihe von Symbolen bestehen, wobei das Modul zum Zusammensetzen ein Basisbandfilter bildet, das erlaubt, eine Reihe von Abtastwerten entsprechend dem ersten bzw. zweiten Modulationstyp zu erzeugen,
- einen Digital/Analog-Wandler (CNA), der die Reihe von Abtastwerten empfängt und das erste bzw. zweite gefilterte elementare Signal elf(t), e2f(t) ausgibt.

3. Modulator nach Anspruch 2, dadurch gekennzeichnet, daß der erste Modulationstyp eine kontinuierliche Phasenmodulation mit Index 1/2 des quasilinearen Typs ist und daß der zweite Modulationstyp eine OQPSK-Modulation ist.

4. Modulator nach Anspruch 3, dadurch gekennzeichnet, daß, wenn der erste Modulationstyp eine OQPRS-Modulation ist, das Basisbandfilter ein Filter äquivalent einer duobinären Kodierung ist, und dadurch, daß, wenn der zweite Modulationstyp eine OQPSK-Modulation ist, das Basisbandfilter ein überhöhtes Kosinusfilter ist.

5. Modulator nach Anspruch 4, dadurch gekennzeichnet, daß für eine feste Taktfrequenz eines festgelegten Werts der erste und zweite Modulationstyp mit einer Datenübertragungsgeschwindigkeit von 30 kb/s bzw. 19,2 kb/s für ein um eine Trägerwellenfrequenz f0 nahe 68,5 kHz zentriertes Band einer Breite von 15 kHz ausgeführt sind.

6. Modulator nach einem der Ansprüche 1 bis 5, dadurch gekennzeichnet, daß die ersten (21) und zweiten (22) Filtereinrichtungen aufweisen:

- ein Schieberegister (212;222), das das erste bzw. zweite Sendesignal sowie ein direktes bzw. um eine Periode T des Symbolabtastsignals verzögertes Symbolabtastsignal empfängt, wobei jedes Schieberegister (212;222) abwechselnd jede zweite Periode des Symbolabtasttaktsignals ein entsprechendes Symbol ausgibt,
- eine Speicherschaltung (2400) des programmierbaren Typs PROM, die abwechselnd die Symbole sowie eine Variable empfängt, die den Typ der Modulation und der gewählten Datenübertragungsgeschwindigkeit repräsentiert, und durch Umkodierung ein Vorzeichensignal und ein Absolutwertsignal ausgibt, die das erste und zweite gefilterte elementare Signal repräsentieren.

7. Modulator nach Anspruch 1 und 6, dadurch gekennzeichnet, daß die Einrichtungen zur phasengleichen und um 90° phasenverschobenen Modulation von einem digitalen Modulator gebildet werden, der aufweist:

- zwei EXKLUSIV-ODER-Schaltungen (310,320), die jeweils an einem ersten Eingang das Vorzeichensignal und an einem zweiten Eingang ein Taktsignal (300) empfangen, dessen Frequenz gleich derjenigen der Trägerwelle f0 ist,
- eine Schaltung (40) zum Verketten von Bits, die einerseits das von jeder EXKLUSIV-ODER-Schaltung ausgegebene Signal und andererseits das von der PROM-Speicherschaltung ausgegebene Vorzeichensignal empfängt und das modulierte Sendesignal in digitaler Form ausgibt,
- eine Digital/Analog-Umsetzerschaltung (41), die das in digitaler Form modulierte Sendesignal empfängt und ein entsprechendes analoges Sendesignal ausgibt.

**8.** Modulator nach einem der vorstehenden Ansprüche, dadurch gekennzeichnet, daß die ersten (21) und zweiten (22) Filtereinrichtungen mittels einer Phasenverriegelungsschleife (7) und eines Taktgebers (6) auf die Pilotfrequenz Fp = 19 kHz des Stereomultiplexsignals getriggert werden, was erlaubt, die Datenübertragungsgeschwindigkeiten des ersten und zweiten Modulationstyps und die Frequenz des modulierten resultierenden Trägersignals auf die Pilotfrequenz zu triggern.

**9.** Modulator nach Anspruch 8, dadurch gekennzeichnet, daß der Taktgeber (6) einen Frequenzzusammmensetzer aufweist, was erlaubt, die von dem Taktgeber (6) ausgegebenen Taktsignale in ihrer Frequenz zu steuern, um innerhalb eines Bereiches von Werten der Datenübertragungsgeschwindigkeit, der proportional zur Frequenzänderung der Taktsignale ist, eine erste und zweite variable und anpaßbare Datenübertragungsgeschwindigkeit zu erhalten.

**10.** Verwendung eines Modulators nach einem der vorstehenden Ansprüche für die Übertragung von Zusatzinformationen bei UKW-Rundfunk.

FIG.1. SPECTRE DU SIGNAL BANDE MULTIPLEX FM

FIG.2a. SCHEMA DE PRINCIPE

EP 0 649 230 B1

FIG.2b. SCHEMA DE PRINCIPE DU FILTRAGE

OQPSK

OQPRS

FIG.2c. RÉPONSE IMPULSIONNELLE DES FILTRES DE MISE EN FORME

FIG.3a. SCHEMA DE PRINCIPE GÉNÉRAL DU MODULATEUR

FIG.3b .SCHEMA DE PRINCIPE DU DÉMULTIPLEXAGE DE LA SOURCE

FIG.3c .SCHEMA DE PRINCIPE DU FILTRE DE MISE EN FORME

FIG.4. MODULATEUR OQPSK-OQPRS

FIG.5a. SCHEMA GÉNÉRAL MODULATEUR ASSERVI SUR FRÉQUENCE PILOTE

FIG.5b. SCHEMA BLOC PLL